# EUROPEAN PATENT APPLICATION

(11) **EP 0 648 791 A1**
(43) Date of publication of application: **19.04.1995**
(21) Application number: 94303188.0
(22) Date of filing: 03.05.1994
(51) Int. Cl.: C08G 18/28, C08K 5/12, C08J 9/14

(54) **A process for producing novel polymer intermediate compounds and polyurethane products made therefrom**

(30) Priority: 13.10.1993 GB 9321105
(71) Applicant: Roy, Santanu, Calcutta-700 006, West Bengal (IN)
(72) Inventor: Roy, Santanu, Calcutta-700 006, West Bengal (IN)
(74) Representative: Dowden, Marina

(57) **Abstract**

An improved process has been developed for producing polyurethane intermediates and polyurethane products which inovlves the use as a novel blowing agent of ethanol and dibutylphthalate (DBP), admixed in molar ratios ranging from 1.5:1 to 4:1, optionally including a waste liquor from the sulphite treatment of paper and paper pulp

## Description

The present invention relates to a process for producing novel polymers, intermediate compounds and polyurethane products made therefrom. More particularly, this invention aims at providing a process for producing a novel compound, which may effectively be used to produce polyurethane products as and when needed and in predetermined form and characteristics.

Usually, polyurethane compounds are in foam form, and the expression "polyurethane form" used in the art signifies a product having a significant number of urethane groups, which have the repeating structure : 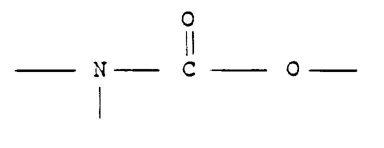
Polyurethane products, e.g. foams, are ordinarily prepared by reacting an isocyanate compound with a compound having one or more "active hydrogens". Such active hydrogen compounds include polyhydroxy compounds, generally termed "polyols", and compounds containing amino or carboxyl moieties. These compounds may additionally contain functional groups capable of supplying replaceable hydrogens. For instance, hydroxyl terminated polyethers and polyesters have been widely used to prepare polyurethane foams. Hydroxy-fatty oils such as castor oil or derivatives thereof have also been used as compounds containing active hydrogen, particularly when rigid or semi-rigid products are needed.

Catalysts are preferably included in the reaction mixture to produce the intermediate component which may subsequently be reacted with ease and rapidity with isocyanate compounds. However, it has been found that the addition of catalyst is not required in all applications.

Gas for producing the foam is usually generated at least in part by adding water to the reactants. The water reacts with isocyanate to produce carbon dioxide for foaming. In addition thereto, blowing agents can be mixed with the reactants to produce gas for foaming. Surfactants and other additives may also be included in the reaction mixture to regulate the size of the foam cells and otherwise to influence the properties of the resulting foam.

As regards the polyurethane products obtained by interacting the intermediate compound with the isocyanate derivative, it is possible to obtain a wide range of physical and chemical properties of the foam by appropriate selection of the specific raw materials and the reaction conditions.

The foaming agent does play a very crucial role and hence its reliability has to be ascertained carefully in controlling the foam processing. Hitherto, halohydrocarbons such as fluorocarbons (FreonS (trademark) /CFCs) have been used as the blowing agent in the manufacture of polyurethane products used for insulation, building panels, refrigerator flotation, packaging, mattresses, and hosts of other purposes. Fluorocarbons have been found to be responsible for the depletion of the ozone layer whereby "holes" or "punctures" are being formed, through which ultraviolet rays are infiltrating in much greater intensity, causing skin cancers and serious optical ailments, and climatic repercussions, including the so-called "greenhouse effect", resulting in rises in the terrestrial temperature level and consequent melting of polar ice caps. If ozone layer depletion is allowed to continue unabated, the outcome could be devastating for the various life forms, which may become extinct in the long run.

Industries manufacturing "CFCs" and users thereof are very much concerned, and are in search of a new, harmless blowing agent which will not cause atmospheric pollution and/or depletion of the ozone layer.

There is therefore a need for a mild yet effective low toxicity blowing agent, which is particularly suited to the production of rigid polyurethane foam. Efforts have been made accordingly to formulate a suitably stable and mobile liquid blowing agent having the following desired characteristics:-
(i) the blowing agent should not give out any gas which will endanger the environment as well as life forms;
(ii) it should be sufficiently stable at room temperature and be easy to handle;
(iii) it should have a substantial lubrication capacity (viscosity cut-out) which would enhance reactivity between -N-C-O and -OH radicals;
(iv) it should be capable of releasing a gas in the course of the exothermic reaction between the intermediate compound of the present invention and the isocyanate;
(v) it should be compatible with compounds containing active hydrogen(s);
(vi) it should give a low K-factor to the polyisocyanatehydroxyl product and should not get diffused in the course of cutting and sizing of the polyurethane product;
(vii) it should impart to the polyurethane product a good skin characteristic with satisfactory mechanical properties; and
(viii) it should preferably be a low cost formulation and compatible with all types of chemicals capable of acting as hydrogen donors.

The following additional properties are desirable in a good blowing agent:-
(a) the blowing agent should be odourless and non-toxic;
(b) it should be non-corrosive and non-hazardous;
(c) if in gaseous form, the agent should be thermally stable and chemically inert;
(d) it should not possess a low vapour pressure under ambient conditions;
(e) it should have a high specific gravity;
(f) the agent, if gaseous, should possess a slower diffusion rate through the polymer membrane than air; and
(g) it should have easy availability commercially.

The foregoing criteria are substantially met by the novel blowing agent of this invention which can effectively replace halohydrocarbons. The novel blowing agent of the invention comprises ethanol and dibutylphthalate, admixed in molar ratios ranging from 1.5:1 to 4:1. This novel blowing agent can not only provide gas for generating foam when mixed with reactants for a foam polymerization reaction, but, in certain instances, can obviate the need for a surfactant to be included in the reaction mix, and the foam produced will still have a substantially uniform diameter.

The ingredients, e.g. ethanol and butanol, can be added externally or may be generated in situ by a microbiological process in which selected strains of microorganisms are cultivated in waste sulphite liquor under controlled conditions in order to produce alcohol.

The novel blowing agent used in making the intermediate compound of this invention has been found to have the following major characteristics:-
1. it can completely replace the conventional halohydrocarbon blowing agents, which have potentially hazardous "greenhouse" and ozone-depleting properties, whereas in itself the novel agent is completely "ecofriendly";
2. it is quite stable at ambient temperature, easy to handle and has good dispersion characteristics;
3. since a part of the constituent reactants of the blowing agent is a monohydric/polyhydric alcohol, such agent improves foaming character in other constituents;
4. it improves the flow-character of reactants which enhances reactivity of the foam, exhibiting a self-stabilising effect leading to the elimination of conventional surfactant(s) in the course of foam making, thereby effecting a considerable cost saving, and is partially reactive with the polyurethane chemicals;
5. in the course of foam formation, the said agent helps proper interaction and migration of constituents to form an integral skin with the foam body ensuring proper distribution of cell structure, thereby creating an uniformly cellular structure throughout the mass of the body thus formed;
6. it imparts fire retardancy properties to the foam formed when it incorporates phosphorus, nitrogenous or boron compounds;
7. the foam formed by using this novel agent has considerable bio-degradability:
8. it shows the beneficial effect of reducing hydrogas permeance, and of imparting low density and closed cell structure to the polyurethane products; and
9. it has a good plasticizing effect on the reaction mix, fluidising and improving the mobile factor thereof, is relatively low-cost and is virtually non-toxic.

The inherent dangers of the prior art polyurethane foaming processes were sought to be overcome; in particular it was sought, to eliminate dangerous and toxic halohydrocarbon blowing agents. Ecological imbalance brought about by the processes followed hitherto is indeed staggering, and is already manifesting itself in the form of an increased incidence of skin cancers and of various other ailments in different parts of the world, including Kerala in India.

An object of the present invention is to evolve a "safe" process which is both simple and "ecofriendly".

Another object of this invention is to provide a process wherein a novel, non-toxic, non-hazardous blowing agent is used.

A further object of this invention is to provide a process for preparing a polymeric intermediate compound, from which "tailor-made" polyurethane products may be formed, as and when needed, the said compound being highly storage stable.

A still further object of this invention is to provide a process for making polyurethane products from the aforesaid novel polymeric intermediate compounds, the consistency and physical parameters of which may be closely controlled to suit diverse end uses.

Another object of this invention is to produce polyurethane products from the above-mentioned novel intermediate compounds wherein there are incorporated filler materials of both vegetative and mineral origin to impart specific characteristics to the end-products.

Yet another object of this invention is to utilize industrial waste materials to reduce pollution hazard and to maintain ecological balance.

The foregoing and allied objects are achieved by the present invention according to which there is provided a process for producing novel polymer intermediate compounds and polyurethane products made therefrom, which comprises reacting together:
(a) one or more compounds having active hydrogen(s) selected from the group consisting of:
   (i) polyhydroxy compounds or polyols,
   (ii) hydroxyl terminated polyethers or polyesters and
   (iii) hydroxy fatty oils or derivatives thereof, or an adduct of any two of the foregoing compounds:
(b) a blowing agent comprising ethanol and dibutylphthalate, admixed in molar ratio ranging from 1.5:1 to 4:1, optionally including a waste liquor from the sulphite treatment of paper and paper pulp;
(c) a catalyst, and, if desired, also incorporating.
(d) one or more additives selected from the group consisting of:
   (i) surfactants,
   (ii) chain extenders,
   (iii) filler materials,
   (iv) modifiers, and
   (v) plasticisers,
   and, when desired, converting the resulting intermediate compound to a polyurethane by reaction with an iocyanate compound.

The novel polymeric intermediate compounds are adducts of (1) polyhydroxy compounds, (2) blowing agent, (3) catalyst, and optionally (4) one or more additives including surfactants, fillers, chain extenders and modifiers.

The instant invention further comprises the step of combining an isocyanate derivative with the above intermediate compound to form a polyurethane product, the consistency and rigidity characteristics of which may be controlled within predetermined limits, depending on the end use of the polymeric product. Suitable illustrations of polyols and isocyanate derivatives are given below. The gas generating agent is ordinarily water and a blowing agent. The novel blowing agent of this invention is a combination of a dibutylphthalate and ethanol, optionally extended with Ca- or Mg-lignosulphonates obtained from the waste black liquor from the pulp and paper making industry.

Preferred polymeric products of this invention may be subjected to "curing" to produce materials which are strong and tough. Fire-retardant characteristics may be imparted thereto by adjusting the formulation itself in such manner that the need for a fire-retardant chemical is greatly reduced or even eliminated altogether in certain applications. It has been observed that foam products made by the intermediate compounds of this invention exhibit relatively low flammability when their density exceeds about 8lbs/cft.

A wide range of polyhydroxy compounds, including polyester polyols and polyether polyols, may be used as the polyhydroxy compound referred to above. Representative polyether polyols include poly(oxyproplene) glycols, poly(oxyproplene-b-oxyethylene) glycols (block copolymers), poly(oxyproplene) adducts of glycerol, poly(oxypropylene) adducts of trimethylolpropane, poly(oxypropyl-b-oxyethylene) adducts of trimethylolpropane, poly(oxypropylene) adducts of 1,2,6-hexanetriol, poly(oxyproprolene) adducts of pentaerythritol, poly(oxypropylene-b-oxyethylene) adducts of ethylenediamine (block copolymers), and poly(oxypropylene) adducts of sucrose, methylglycoside, sorbitol, and the like.

Representative polyester polyols include those prepared from the following monomers, e.g. adipic acid, phthalic anhydride, ethylene glycol, propylene glycol, 1,3-butylene glycol, 1,4-butylene glycol, diethylene glycol, 1,2,6-hexanetriol trimethylolpropane and 1,1,1-trimethylolethane. It is generally preferred that the polyhydroxy compounds have average molecular weights, calculated on the basis of their hydroxyl numbers, in the range of from 50 to 3000, preferably within a range of 50 to 1000. As specific examples, poly(oxypropylene)polyols having hydroxy numbers in the range of 300 to 800 are suitable for certain preferred formulations of polyurethane product of the present invention. N,N,N',N'-tetrakis (2-hydroxypropyl)-ethylenediamine is another polyhydroxy compound which is found suitable for certain ether formulations and is marketed by BASF Wyandotte Corporation as "Vuadrol". Other hydroxy compounds are "Niax Pentol" of Union Carbide Corporation, and "Veranol" of Dow Chemical Company.

As regards isocyanates compounds, one may select from a wide range of materials, belonging to aliphatic, aromatic and alicyclic isocyanates. Representative examples are, for instance, 2,4-tolylene diisocyanate, (65:35) tolylene diisocyanate, (80:20) tolylene diisocyanate, 4,4'-diphenylmethane diisocyanate, dianisidine diisocyanate, tolidine diisocyanate, hexamethylene diisocyanate, m-xylylene diisocyanate, phenyl isocyanate, p-chlorophenyl isocyanate, o-chlorophenyl isocyanate, m-chlorophenyl isocyanate, 3,4-dichlorophenyl isocyanate, 2,5-dichlorophenyl isocyanate, methyl isocyanate, ethyl isocyanate, m-butyl isocyanate, n-propyl isocyanate and octadecyl isocyanate. Crude mixtures of isocyanates may be employed for reasons of economy. As a specific example, one may cite polymethylene polyphenylisocyanates marketed as "PAPI" and "Mondur ME" by Upjohn Company and Mobay Chemical Company, respectively, which may be used in specific formulations of the present invention.

Gas generating agents used in the process of this invention may or may not include water, but the latter will be a little more expensive. Although it is not necessary in every case to use a blowing agent in addition to water, the use of water per se as a gas generating agent tends to produce a material which is friable, and is thus undesirable for most applications.

The novel blowing agent used for producing the novel polymeric intermediates according to this invention comprises the combination of ethanol and dibutylphthalate. A preferred formulation of blowing agent may be had by mixing the above ingredients so that the molar ratio of ethanol to dibutylphthalate is in the range of from 1.5:1 to 4:1. The blowing agent not only can provide gas for generating foam when mixed with the reactants for a foamed polymerisation reaction, but can obviate the need for a surfactant to be included in the reaction mix. Even when no additional surfactant is included, foam produced using the ethanol-DBP blowing agent is shown to possess substantially uniform density and to be made of bubbles of near uniform diameter. The addition of lignosulphates obtained from the black liquor coming out of the Kraft process of paper making has been found to give satisfactory results.

Use of catalyst(s) in the principal process of this invention has been found to facilitate subsequent polyurethane compound formation. Suitable examples of such catalysts are dimethylethanolamine, triethylamine and triethylenediamine.

Inclusion of a surfactant is often advantageous for preparing foamed polymeric materials, particularly when bulk castings are to be formed. Silicone surfactants commercially available from Dow Corning Corporation, e.g. under the trade names "Dow-Corning 193", "Dow-Corning 194", and "Dow-Corning 197", may be used. As mentioned earlier, the use of surfactant may be avoided in certain instances by employing ethanol-DBP, optionally modified with lignesulphonates, as the blowing agent.

It may also be advantageous to include a plasticizer among the ingredients of the process of this invention. Preferred plasticizers include dioctylphthalate, diisoctylphthalate, dibutylphthalate, diisobutylphthalate, dicaprylphthalate, diisodecylphthalate, trieresyl-phosphate, trioctylphosphate, diisooctyladipate and diisodecyladipate.

Often a modifier is included in the intermediate adduct to influence the properties of the final product. Usually, conventional modifiers are used, such as, for instance, benzene or a like solvent, or mixtures thereof.

Apart from the additives mentioned above, another important ingredient is filler, which goes to influence the characteristics of the polyurethane products produced by the interaction of the intermediate adduct with the isocyanate derivative, which products may have consistencies varying from rigid, semi-rigid and elastomeric to sprayable, froth-like, foamy and soft. The fillers may broadly be classified into two categories, namely, metallic or metal derivatives and alloys on the one hand, and non-metallic on the other hand. Metals such as zinc, aluminium, copper and iron may be incorporated as fillers, usually in a finely divided state, to impart improved mechanical properties, hardness and also desired electrical properties to the polyurethane products. Alloys such as brass, bronze and steel, for example, and metallic derivatives such as industrial wastes, e.g. slag from blast furnaces or froths from Bessemer converters, may be effectively used as filler materials.

The non-metallic fillers may be subdivided depending upon their sources, such as, for instance, (i) siliceous including ceramic materials such as glass frits, (ii) industrial wastes, (iii) agro wastes, (iv) cellulosic wastes and (v) mineral fillers. Industrial wastes may be further classified into inorganic and organic fillers, depending upon their source and composition.

Illustrations of different types of fillers are given below by way of example, and the invention is in no way confined thereto:
(i) sand, soapstone, steatite, talc and clay, for example;
(ii) flyash, cinders, various slags, red mud (from the aluminium industry) glass frits, calcium and magnesium sulphates (from paper industry wastes), polyisocyanate pitch, fertilizer waste, molasses waste, copper mud and phosphate waste (for imparting fire retardancy), for example;
(iii) and (iv) coconut shell powder, cashew nut shell liquid (CNSL) resins, rice husks, straw powder, wood shavings and charcoal powder, for example; and
(v) gypsum, limestone, calcite, dolomite, magnesite, basalt or granite powder (specially from deep strata, such as from goldmines) and marble dust, for example.

The polyurethane products may be obtained with a foam-like consistency by suitably adjusting the parameters. Incorporation of compounds such as butanediol or diethylene glycol have been found to facilitate the production of polymers in microcellular form. Vegetative products such as "CNSL" have been used in this invention as a "modifier". Some of the above fillers, particularly siliceous fillers such as SiO₂, as present in fly ash, have been found to produce excellent "skin characteristics". This is particularly important in the case of preformed, cast structures and flexible foam, particularly used as cushioning materials, insulating fillers or shock absorbers.

The process of the present invention can generally be carried out in the preferred manner described below, although it will be readily apparent to those skilled in the art that various other sequence of steps may be used. The polyhydroxy compound or a compound with at least one active hydrogen atom, or an adduct of any two of the foregoing compounds, is thoroughly mixed with a blowing agent and a catalyst, and with any one or more of additives such as surfactants, chain extenders, fillers, modifiers and plasticizers, thereby forming the novel polymer intermediate compound of this invention. The resulting adduct is then combined with an isocyanate derivative in a conventional mixing head for polyurethane products. In a few special cases, the intermediate compound may be mixed with the polyisocyanate in the presence of additional amounts of blowing agent and water. Generally, a molar ratio of isocyante derivative to intermediate compound is maintained in the range of from 1:1 to 11:1. From 0.5 to 1.75 percent by weight of water based on the weight of the intermediate compound is generally preferred. From experience, it has been found that the density of the polyurethane product, particularly in foam form, is determined to a large extent by the quantities of water and blowing agent used. A preferred range of temperature for final mixing is between 25°C and 85°C.

The invention will now be further amplified by the working Examples given below, which disclose preferred embodiments of this invention. It is to be understood that the Examples appearing herein are given by way of illustration only, so that the invention is not confined to the conditions and parameters narrated therein.

### Example 1

This is a process where two components A and B are mixed through a dispensing unit to form a foam of rigid, semi-rigid or flexible consistency. The ratio of the components is favourably 1:1 and the speed of mixing is about 2 to 4000 r.p.m.

Component A consists of (1) polyhydroxy compound, (2) catalyst, (3) blowing agent and (4) surfactant. Component B comprises polyisocyanate or diisocyanate (isomeric mix of 2,4/2,6-tolylene diisocyanate).
**Step (1)** - One kg of sucrose-based polyether polyol with an hydroxy number of 528, a combining weight of 106 and a viscosity (in cps at 25°C) 2 of 2,000,000 is placed in a vessel. This is an adduct of sucrose and propylene oxide; catalyst, e.g. dimethylethanolamine and/or triethylamine, and reaction conditioner are used to produce a symmetrical oxide addition product of sucrose. This polyhydroxy compound has high functionality and a cyclic structure.
**Step (2)** - 300 g of N,N,N',N'-tetrakis (2-hydroxypropyl)-ethylene diamine, 5 g, dimethylethaneoline, 10 g, triethylamine and 100 g, DBP-ETOH mixture are used. All the ingredients are mixed thoroughly by continuous stirring under a nitrogen atmosphere. Then, the entire mixture as Component A is mixed in 1:1 ratio with diphenylene methane diisocyanate (B). This mixing is done through a dispensing unit where a high speed mixer blends A and B components thoroughly and forms a lightweight rigid foam.

### Example 2

Polyhydroxy compound, e.g., castor oil (1000 g) is placed in a vessel and air is allowed to bubble, through the castor oil, the temperature of the oil being kept at 100°C. After 1 hour the temperature is brought down to 30°C. Then, catalyst - dimethylethanolamine or triethylamine - (10 g), and DBP-ETOH blowing agent (100 g), are taken. All these ingredients are blended thoroughly for 1 hour to form Component A. Afterwards, this intermediate Component A is mixed with polyisocyanate compound in 1:1 ratio to form a foam with high insulating and acoustic value.

### Example 3

Froth foam is prepared by using N,N,N',N'-tetrakis (2-hydroxypropyl-ethylenediamine) blended with 500 g of sucrose-based polyol with an hydroxyl number of 450, a maximum water percentage (by weight) of 0.10, a density at 20°C of 1.15, alkalinity mea/gm with a maximum of 0.10, combining with 1 to 4. 300 g of this chemical are thoroughly blended. Then 250 g of DBP-ETOH blowing agent 5 g of water, 30 g of amine catalyst (dimethylethanolamine or triethylamine) and 30 g of silicone surfactant are added to the mix and blended thoroughly to form an intermendiate Component A.

Afterwards, the intermediate Component A is pumped into the mixing head of a dispensing unit and is mixed with a polyisocyanate compound, e.g. the polymethylene polyphenyl isocyanate compound marketed as "PAPI" by the Upjohn Company or that marketed as Mondur ME by the Mobay Chemical Company, constituting a Component B. This mix is injected into an hollow section or into a mould to form a froth foam.

### Example 4

Fly ash filled foam which has valuable structural applications and is also of value in the making of composite materials may be processed as follows.

Castor oil (100 gms) is heated at a temperature of 80°C, then epoxy resin (100 gms) is added to the mix. Thereafter, 400 gms of fly ash are added slowly together with 10 gms of triethylenediamine, 10 gms of N,N-dimethylethanolamine, 5 gms of dibutyltin dilaourate, 10 gms of silicone surfactant and 300 gms, of DBP-ETOH mix are thoroughly blended together. During the addition of catalyst, the temperature of the castor oil mix is brought down to 30°C. The blended adduct is Component A.

This adduct is mixed thoroughly in 1:1 ratio with polymethylene polyphenylene isocyanate (e.g. the commercial product "PAPI" a Mondur E) to form a tough rigid foam.

### Example 5

An one-shot, pour-in-place formulation based on polymethylene polyphenylene isocyanate may be made as follows. Methyl glucoside polyol (OH No.: 440)- 1000 gms - is placed in a vessel fitted with a stirring mechanism. To this there is added a silicone surfactant (15 gms), catalyst, e.g. dimethylethanolamine (35 gms) and DBP-ETOH blowing agent (400 gms). All these are blended thoroughly at a temperature of 35°C to produce Component A.

Then this is mixed with polymethylene polyphenylene isocyanate (e.g. PAPI or Mondus E) in a ratio of 1:1.1 to form a 97% closed cell foam with an insulation value of 0.114.

### Example 6

This Example illustrates the production of sprayable foam for insulation and/or anticorrosive coating with varying amounts of blowing agent, namely, DBP-ETOH mix, which may be applied to a desired substrate by a mixing gun adapted to mix Components A and B, and to deliver the foaming reactants in situ.

The formulation comprises two Components A and B with the slight difference that Component B is a quasi pre-polymer, which undergoes a near instanteous reaction as soon as it comes into contact with Component A.
Component A-
   (i) N,N,N',N'-tetrakis (2-hydroxypropyl) ethylene diamine ..... 44 parts by wt.,
   (ii) Ethanol - DBP blowing agent .... 40 parts by wt.
Component B - quasi-prepolymer based on 400 molecular weight triol and 80/20 "TDI" (25% free -N-C-O, Viscosity: 4000 CPS) .... 100 parts by wt.

These two Components A and B are mixed thoroughly by means of an external mixing gun, and the mixed components may be sprayed on any suitable substrate to form an instant foam which forms an effective coating thereon. Such a coating has been found to possess an high degree of insulation and anti-corrosiveness.

### Example 7

High density foam reinforced with coconut shell powder may be formed as shown below. 1000 gms of saponified castor oil with a pH of around 7.5 is placed in a vessel with provisions for stirring and heating. Then, the saponified castor oil is gradually heated at a temperature of 100°C 200 g of coconut shell powder are slowly added to this mix. Thereafter, the temperature of the mix is brought down to 35°C. The adduct is mixed with silicone surfactant (10 gms), catalyst (e.g. dimethylethanolamine) (30 gms) and blowing agent [DBP-ETOH] (300 gms) and 5 gms of water. Blending is continued of this mix for 1 hr. to produce Component A.

Component A is pumped into the mixing head of a dispensing unit where it is mixed with polyisocyanate compound (e.g. PAPI or Mondur E) in a ratio of 1:1, and this is discharged into a mound or cavity to form a microcellular integral skin foam.

### Example 8

Method of making cast urethane parts for the automobile industry, the aerospace industry or the furniture industry by utilising DBP-ETOH blowing agent through a reaction injection moulding mechanism.

### Preparation of Component A

Polyol (preferably a poly(oxypropylene)glycol with a molecular weight range of 3000-6000) of 1000 gms is placed in a vessel provided with a stirring mechanism, together with crosslinked 1,4-butanediol (100 gms), and ethyleneglycol (100 gms) All the ingredients are throughly mixed. Then, 50 gms of triethylenediamine, 50 gms of dibutyltin dilaurate, 5 gms of water and 60 gms of DBP-ETOH blowing agent are added to the mix. Then, the ingredients are thoroughly mixed inside the vessel to give rise to Component A.

### Preparation of Component B

As Component B, MDI e.g. 4,4'-diisocyanatediphenylenemethane is pumped into a mixing head (1:1 ratio) to a total weight of 1365 gms, and thoroughly mixed with Component A to form a microcellular elastomer with an excellent skin quality, flexural modulus, tensile strength, impact strength, abrasion resistance, dimensional stability and demoulding behaviour.

### Example 9

An one-shot method of preparing flexible polyurethane foam for mattresses and cushions, for example.

The following ingredients are placed in a suitable reaction vessel in the amounts indicated against each one of them:

| | |
|---|---|
| (i) polyether triol (molecular weight around 3000) | 700 gms |
| (ii) polyether diol (molecular weight around 2000) | 300 gms |
| (iii) triethylene diamine | 10 gms |
| (iv) N-ethylmorpholine | 30 gms |
| (v) silicone surfactant | 20 gms |
| (vi) stannous octoate | 3.5 gms |
| (vii) dibutyltin dilaureate | 1 gms |

The ingredients are mixed well in the vessel. Thereafter, 30 gms of water and 250 gms of ETOH-DBP blowing agent are added thereto to produce the intermediate Component A.

The adduct, namely Component A, thus obtained is mixed with 440 gms of "TDI" (80/20 isomer), and is then dispensed through an agitator having a speed of 2400 r.p.m. on to a continuous conveyer or into a mould to form a flexible foam.

One of the salient features of this invention is adaptability of the total system which affords close control to produce macrocellular or microcellular polyurethane products, as may be desired. Furthermore, divergent types of product may be had from the same dispensing unit, e.g., products having rigid, semi-regid, flexible or foamy consistency, which may find numerous applications, both domestic as well as industrial, as indicated above.

It is not intended to confine this invention to the embodiments described above. For example, the foaming reaction may or may not be catalyzed. It is recognised that these and other changes may be made in the formulations and processes specifically disclosed herein, including sequence of addition of ingredients, without departing from the scope of this invention, and it is intended to encompass all other embodiments, alternatives and modifications consistent with the instant invention.
Having described this invention in detail, particularly with the help of the illustrative Examples, I now define the invention by means of the appended claims.

## Claims

1. A process for preparing novel polymer intermediates compounds and polyurethane products made therefrom which comprises reacting together:
(a) one or more compounds having active hydrogen(s) selected from the group consisting of:
(i) polyhydroxy compounds or polyols,
(ii) hydroxyl terminated polyethers or polyesters, and
(iii) hydroxy fatty oils or derivatives thereof, or an adduct of any two of the foregoing compounds;
(b) a blowing agent comprising ethanol and dibutylphthalate (DBP), admixed in molar ratios ranging from 1.5:1 to 4:1, optionally including a waste liquor from the sulphite treatment of paper and paper pulp;
(c) a catalyst, and, if desired, incorporating therein
(d) one or more additives selected from the group consisting of
(i) surfactants,
(ii) chain extenders,
(iii) fillers,
(iv) modifiers and
(v) plasticizers

2. A process according to claim 1, comprising the further step of converting the polymer intermediate compound obtained as a product of the process of claim 1, by reaction with an isocyanate compound to a polyurethane products.

3. A process as claimed in Claim 1 or Claim 2, wherein the hydroxy fatty oil is castor oil or a derivative thereof.

4. A process as claimed in Claim 1 or Claim 2, wherein the polyhydroxy compound is a polyether polyol having a hydroxyl number in the range of from 80 to 1000 (M.W. 50 to 1000).

5. A process as claimed in Claim 1 or Claim 2, wherein the polyether polyol is a poly(oxypropyl)polyol.

6. A process as claimed in claim 5, wherein said poly(oxypropyl)polyol is a sucrose-based compound.

7. A process as claimed in Claim 1 or Claim 2, wherein the polyhydroxy compound is N,N,N',N'-tetrakis (2-hydroxypropyl)ethylene diamine.

8. A process as claimed in any of Claims 1 to 7, wherein the active hydrogen-containing compounds composite polyhydroxy compounds (polyols), and compounds containing amine groups and carboxyl groups, or functional groups in addition to groups which supply replaceable hydrogen(s).

9. A process as claimed in any of Claims 1 to 8, wherein phthalic acid, adipic acid or an organo-phosphoric acid derivative is used as a plasticiser.

10. A process as claimed in any of Claims 1 to 9, wherein a silicone derivative is used as a surfactant.

11. A process as claimed in any of Claims 1 to 10, wherein dimethylethanolamine and/or triethylamine is used as a catalyst is the formulation of the intermediate compound formation.

12. A process as claimed in any of Claims 1 to 11, wherein benzene or "CNSL" (cashew nut shell liquid) is used as a modifier.

13. A process as claimed in any of Claims 1 to 12, wherein said blowing agent additionally includes black waste liquor from the sulphite treatment of pulp and paper containing lignosulphonates of alkaline earth metals.

14. A process as claimed in Claim 13, wherein said liquor contains lignosulphonates of calcium and in magnesium.

15. A process as claimed in any of the preceding claims, in which filler of a metallic or non-metallic nature is incorporated into the reaction mix to form said intermediate compound.

16. A process as claimed in any of the preceding claims, wherein said intermediate compound is reacted with an isocyanate derivative in a proportions ranging between 1:1 to 1:11 by weight, and, if desired, in a nitrogen atmosphere.

17. A process as claimed in Claim 16, wherein the final mixing of the intermediate compound and isocyanate derivative is made within a temperature range of from 25°C to 85°C.

18. A process as claimed in any of Claims 1 to 17, wherein water is present in any amount of 0.5 - 1.75% by weight of the intermediate compound.

19. A process as claimed in any of the preceding claims, wherein there may be used a mixing unit equipped with an agitator having a mixing speed of 200-4000 r.p.m.

20. A process for preparing novel polymer intermediate compounds and polyurethane products made therefrom, substantially as hereinbefore described, with particular reference to any one of the specific Examples given.
